# EUROPEAN PATENT SPECIFICATION

(11) **EP 3 092 566 B1**
(45) Date of publication and mention of the grant of the patent: **17.07.2019**
(21) Application number: 14833445.1
(22) Date of filing: 31.12.2014
(51) Int. Cl.: G06F 9/50, G06F 9/455

(54) **VEHICLE WITH MULTIPLE USER INTERFACE OPERATING DOMAINS**
FAHRZEUG MIT OPERATIONSDOMÄNEN FÜR MEHRERE BENUTZERSCHNITTSTELLEN
VÉHICULE AYANT DE MULTIPLES DOMAINES D'EXPLOITATION D'INTERFACE UTILISATEUR

(30) Priority: 06.01.2014 US 201461924203 P
(43) Date of publication of application: 16.11.2016
(73) Proprietor: Johnson Controls Technology Company, Milwaukee, WI 53209 (US)
(72) Inventor: AHMED, Waheed, 76744 Woerth (DE); WIETZKE, Joachim, 76227 Karlsruhe (DE)
(74) Representative: Schwöbel, Thilo K.
(86) International application number: PCT/US2014/072963
(87) International publication number: WO 2015/103376

(56) References cited:
- US-A1- 2010 058 335
- US-A1- 2013 125 117
- US-A1- 2013 347 131

## Description

### BACKGROUND

The present invention relates generally to the field of computerized user interfaces for vehicle installation. Vehicle user interface displays (e.g., a dial, a radio display, etc.) are conventionally fixed to a particular location in the vehicle. They are also conventionally controlled by entirely different circuits or systems. For example, the radio system and its user interface is conventionally controlled by a first system and the speedometer dial is conventionally controlled by a completely different system.
US 2013/125117 A1 discloses a method for using a resource of a hardware platform with at least two virtual machines, where a first machine of the virtual machines with a first operating systems runs separately on at least a first processor core or a first processor, and where a number (at least one) of further virtual machines runs on at least one further processor core or processor.

It is challenging and difficult to develop vehicle user interface systems having high reliability, configurability, and usability.

### SUMMARY

In the following, the term "embodiment" is to be understood as "example", or "aspect", unless it is directed to a combination of features defined in the claims. One implementation of the present disclosure is a computer system for integration with a vehicle user interface according to claim 1. The computer system includes a processing system having a multi-core processor. The processing system is configured to provide virtualization for a first guest operating system (OS) in a first core or cores of the multi-core processor. The processing system is also configured to provide virtualization for a second guest operating system in a second and different core or cores of the multi-core processor. Virtualization may be provided for any number of operating systems, each operating system being virtualized in a discrete core or core of the multi-core processor. The first guest operating system is configured for high reliability operation. The virtualization prevents operations of the second guest operating system or any other operating system from disrupting the high reliability operation of the first guest operating system.

As used herein, the terms "first core" and "second core" are intended to distinguish one core of the multi-core processor from another core of the multi-core processor. The descriptors "first" and "second" do not require that the "first core" be the first logical core of the processor or that the "second core" be the second logical core of the processor. Rather, the "first core" can be any core of the processor and the "second core" can be any core that is not the first core. Unless otherwise specified, the descriptors "first" and "second" are used throughout this disclosure merely to distinguish various items from each other (e.g., processor cores, domains, operating systems, etc.) and do not necessarily imply any particular order or sequence.

In some embodiments, the multi-core processor is configured to provide a first full virtualization environment using the first core or cores such that no modifications to the first guest operating system are necessary. The multi-core processor may be configured to provide a second full virtualization environment on the second core or cores such that no modifications to the second guest operating system are necessary. In some embodiments, the system includes a two stage memory management unit that maps intermediate addresses used by guest operating systems to memory locations or memory mapped devices.

In some embodiments, the system includes a hypervisor executed by the processing system. The hypervisor may be configured to perform the initial configuration and allocation of resources for the virtualization. The hypervisor may then transition into a dormant mode and not handle regular scheduling and privilege resolution tasks. The hypervisor may allocate each guest operating system's domain its own CPU core (or cores), its own memory region, and/or its own devices. In some embodiments, the hypervisor is not used for guest OS to guest OS interrupt distribution. In various embodiments, interrupts may be delivered to a desired core by a generic interrupt controller (GIC) or a virtual GIC (e.g., to direct the interrupts when trapped by the hypervisor on same core where guest operating system is running).

In some embodiments, virtual devices are established for communication between individual domains. The virtual devices may be generated and operate according to a device tree identifying the device's interrupts. The device tree may further identify "doorbell interrupts" which specify what interrupts the device should use for communication to the other core.

In some embodiments, one of the plurality of domains is a domain which conducts the combination of graphics from disparate domains. Applications running on the remaining domains may fill a frame buffer and provide the frame buffer information to a virtual device running on the domain which conducts the combination. The graphics distribution may occur without transferring metadata describing the graphics to the domain which conducts the combination of graphics. In some embodiments, metadata is not transmitted to the first guest operating system configured for high reliability operation by any other domain.

In some embodiments, one of the plurality of domains is a domain which controls a hardware networking adapter. Applications running on the remaining domains may access the hardware networking adapter using virtual networking adapters exposed to their operating system's user spaces.

In some embodiments, the virtual networking adapters use domain-to-domain interrupt distribution and reading and writing of a shared memory space to effect the communication from domain-to-domain.

In some embodiments, the system includes a multi-core microprocessor. The system further includes a hypervisor configured to associate a first operating system with at least a first core of the multi-core microprocessor and a second operating system with at least a second core of the multi-core processor. The first operating system is configured for at least one high reliability application for the vehicle user interface and the second operating system is configured for a lower reliability application.

In some embodiments, the high reliability application includes outputting safety critical vehicle information to a display system and the lower reliability application includes outputting non-safety critical vehicle information to the same display system. The display system may include a single electronic display or multiple electronic displays.

Another implementation of the present disclosure is a vehicle interface system according to claim 10.

Those skilled in the art will appreciate that the summary is illustrative only and is not intended to be in any way limiting. Other aspects, inventive features, and advantages of the devices and/or processes described herein, as defined solely by the claims, will become apparent in the detailed description set forth herein and taken in conjunction with the accompanying drawings.

### BRIEF DESCRIPTION OF THE DRAWINGS

FIG. 1 is an illustration of a vehicle (e.g., an automobile) for which the systems and methods of the present disclosure can be implemented, according to an exemplary embodiment.
FIG. 2 is an illustration of a vehicle user interface system that may be provided for the vehicle of FIG. 1 using the systems and methods described herein, according to an exemplary embodiment.
Fig. 3A is an illustration of a vehicle instrument cluster display that may be provided via the vehicle user interface system of FIG. 2 according to the systems and methods of the present disclosure, according to an exemplary embodiment.
FIG. 3B is a block diagram of a vehicle interface system including a multi-core processing environment configured to provide displays via a vehicle user interface such as the vehicle user interface system of FIG. 2 and/or the vehicle instrument cluster display of FIG. 3A, according to an exemplary embodiment.
FIG. 4 is a block diagram illustrating the multi-core processing environment of FIG. 3B in greater detail in which the multi-core processing environment is shown to include a hypervisor and multiple separate domains, according to an exemplary embodiment.
FIG. 5 is a block diagram illustrating a memory mapping process conducted by the hypervisor of FIG. 4 at startup, according to an exemplary embodiment.
FIG. 6 is a block diagram illustrating various features of the hypervisor of FIG. 4, according to an exemplary embodiment.
FIG. 7 is a block diagram illustrating various components of the multi-core processing environment of FIG. 3B that can be used to facilitate display output on a common display system, according to an exemplary embodiment.
FIG. 8 is a block diagram illustrating various operational modules that may operate within the multi-core processing environment of FIG. 4 to generate application images (e.g., graphic output) for display on a vehicle interface system, according to an exemplary embodiment.

### DETAILED DESCRIPTION

Referring generally to the FIGURES, systems and methods for presenting user interfaces in a vehicle are shown, according to various exemplary embodiments. The systems and methods described herein may be used to present multiple user interfaces in a vehicle and to support diverse application requirements in an integrated system. Various vehicle applications may require different degrees of security, safety, and openness (e.g., the ability to receive new applications from the Internet). The systems and methods of the present disclosure provide multiple different operating systems (e.g., a high reliability operating system, a cloud application operating system, an entertainment operating system, etc.) that operate substantially independently so as to prevent the operations of one operating system from interfering with the operations of the other operating systems.

The vehicle system described herein advantageously encapsulates different domains on a single platform. This encapsulation supports high degrees of security, safety, and openness to support different applications, yet allows a high degree of user customization and user interaction. The vehicle system includes a virtualization component configured to integrate the operations of multiple different domains on a single platform while retaining a degree of separation between the domains to ensure security and safety. In an exemplary embodiment, a multi-core system on a chip (SoC) is used to implement the vehicle system.

In an exemplary embodiment, the system includes and supports at least the following four domains: (1) a high reliability driver information cluster domain, (2) a cloud domain, (3) an entertainment domain, and (4) an autonomous driver assistance systems (ADAS) domain. The high reliability driver information cluster domain may support critical vehicle applications that relate to the safety of the vehicle and/or critical vehicle operations. The cloud domain may support downloads of new user or vehicle "apps" from the Internet, a connected portable electronic device, or another source. The entertainment domain may provide a high quality user experience for applications and user interface components including, e.g., a music player, navigation, phone and/or connectivity applications. The ADAS domain may provide support for autonomous driver assistance systems.

In an exemplary embodiment, at least four different operating system environments are provided (e.g., one for each of the domains). A first operating system environment for the high reliability domain may reliably drive a display having cluster information. A second operating system environment for the cloud domain may support the new user or vehicle apps. A third operating system environment for the entertainment domain may support various entertainment applications and user interface components. A fourth operating system environment for the ADAS domain may support provide an environment for running ADAS applications. In some embodiments, a fifth operating environment may control the graphical human machine interface (HMI) as well as handle user inputs. Each of the operating system environments may be dedicated to different cores (or multiple cores) of a multi-core system-on-a-chip (SoC).

In an exemplary embodiment, memory for each dedicated operating system is separated. Each of the major operating systems may be bound to one (or more) cores of the processor, which may be configured to perform asymmetric multi-processing (AMP). Advantageously, binding each operating system to a particular core (or cores) of the processor provides a number of hardware enforced security controls. For example, each core assigned to a guest may be able to access only a predefined area of physical memory and/or a predefined subset of peripheral devices. Vehicle devices (e.g., DMA devices) may be subject to memory protection via hardware of the SoC. This strong binding results in an environment in which a first guest operating system (OS) can run on a specific core (or cores) of a multi-core processor such that the first guest OS cannot interfere with the operations of other guest OSs running on different cores. The guest OS may be configured to run without referencing a hypervisor layer, but rather may run directly on the underlying silicon. This provides full hardware virtualization where each guest OS does not need to be changed or modified.

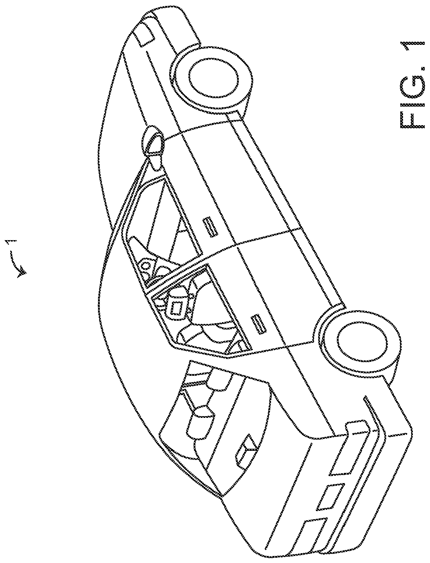

Referring now to FIG. 1, an automobile 1 is shown, according to an exemplary embodiment. The features of the embodiments described herein may be implemented for a vehicle such as automobile 1 or for any other type of vehicle. The embodiments described herein advantageously provide improved display and control functionality for a driver or passenger of automobile 1. The embodiments described herein may provide improved control to a driver or passenger of automobile 1 over various electronic and mechanical systems of automobile 1.

Vehicles such as automobile 1 may include user interface systems. Such user interface systems can provide the user with safety related information (e.g., seatbelt information, speed information, tire pressure information, engine warning information, fuel level information, etc.) as well as infotainment related information (e.g., music player information, radio information, navigation information, phone information, etc.). Conventionally such systems are relatively separated such that one vehicle sub-system provides its own displays with the safety related information and another vehicle sub-system provides its own display or displays with infotainment related information.

According to various embodiments described herein, driver information (e.g., according to varying automotive safety integrity levels ASIL) is brought together with infotainment applications and/or third party (e.g., 'app' or 'cloud') applications. The information is processed by a multi-core processing environment and graphically integrated into a display environment. Despite this integration, at least the high reliability (i.e., safety implicated) processing is segregated by hardware and software from the processing and information without safety implications.

According to an exemplary embodiment, automobile 1 includes a computer system for integration with a vehicle user interface (e.g., display or displays and user input devices) and includes a processing system. The processing system may include a multi-core processor. The processing system may be configured to provide virtualization for a first guest operating system in a first core or cores of the multi-core processor. The processing system may also be configured to provide virtualization for a second guest operating system in a second and different core or cores of the multi-core processor (i.e., any core not allocated to the first guest operating system). The first guest operating system may be configured for high reliability operation. The virtualization prevents operations of the second guest operating system from disrupting the high reliability operation of the first guest operating system.

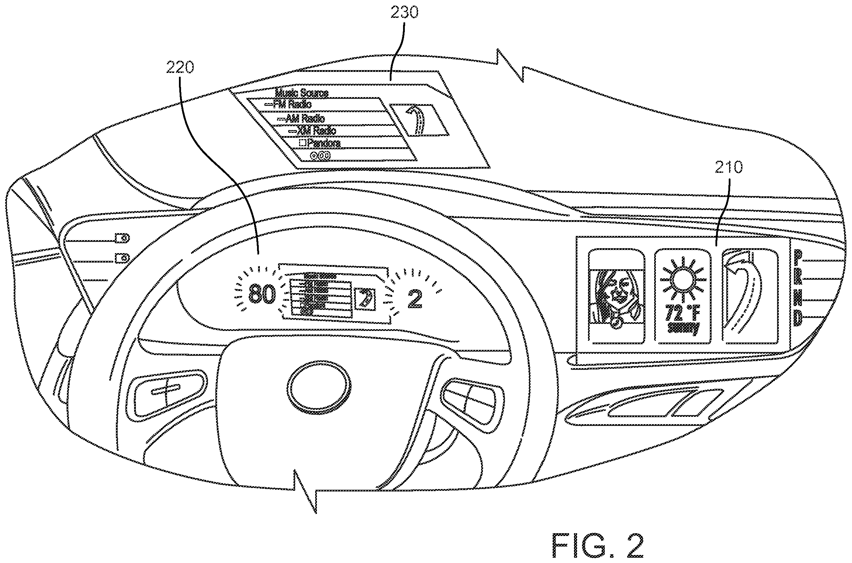

Referring now to FIG. 2, a user interface system for a vehicle is shown, according to an exemplary embodiment. The user interface system is shown to include an instrument cluster display (ICD) 220, a head up display (HUD) 230, and a center information display (CID) 210. In an exemplary embodiment, each of displays 210, 220, and 230 is a single electronic display. In some embodiments, displays 210, 220, and 230 are three separate displays driver from multiple domains. Display content from various vehicle subsystems may be displayed on each of displays 210, 220, and 230 simultaneously. For example, instrument cluster display 220 is shown displaying engine control unit (ECU) information (e.g., speed, gear, RPMs, etc.). Display 220 is also shown displaying music player information from a music application and navigation information from a navigation application. The navigation information and music player information are shown as also being output to display 230. Phone information from a phone application may be presented via display 210 in parallel with weather information (e.g., from an internet source) and navigation information (from the same navigation application providing information to displays 220, 230).

As shown in FIG. 2, ICD 220, CID 210, and/or HUD 230 may have different and/or multiple display areas for displaying application information. These display areas may be implemented as virtual operating fields that are configurable by a multi-core processing environment and/or associated hardware and software. For example, CID 210 is illustrated having three display areas (e.g., virtual operating fields). Application data information for a mobile phone application, weather application, and navigation application may be displayed in the three display areas respectively.

The multi-core processing environment may reconfigure the display areas in response to system events, user input, program instructions, etc. For example, if a user exits the weather application, the phone application and navigation application may be resized to fill CID 210. Many configurations of display areas are possible taking into account factors such as the number of applications to be displayed, the size of applications to be displayed, application information to be displayed, whether an application is a high reliability application, etc. Different configurations may have different characteristics such as applications displayed as portraits, applications displayed as landscapes, multiple columns of applications, multiple rows of applications, applications with different sized display areas, etc.

In an exemplary embodiment, the processing system providing ICD 220, CID 210, and HUD 230 includes a multi-core processor. The processing system may be configured to provide virtualization for a first guest operating system in a first core or cores of the multi-core processor. The processing system may also be configured to provide virtualization for a second guest operating system in a second and different core or cores of the multi-core processor (i.e., one or more cores not assigned to the first guest operating system). The first guest operating system may be configured for high reliability operation (e.g., receiving safety-related information from and ECU and generating graphics information using the received information). The virtualization prevents operations of the second guest operating system (e.g., that may run 'apps' from third party developers or from a cloud) from disrupting the high reliability operation of the first guest operating system.

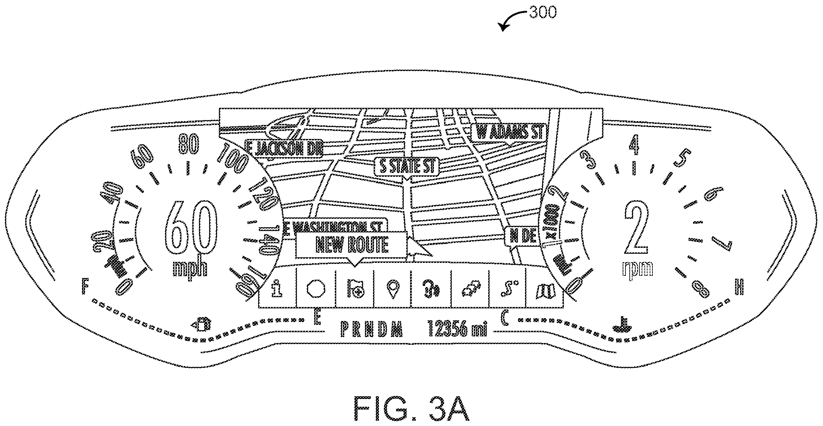

Referring now to FIG. 3A, an instrument cluster display (ICD) 300 is shown, according to an exemplary embodiment. ICD 300 shows a high degree of integration possible when a display screen is shared. In ICD 300, the information from the ECU is partially overlaid on top of the screen area for the navigation information. The screen area for the navigation information can be changed to display information associated with the media player, phone, or other information. Multiple configurations are possible as explained above. In some embodiments, ICD 300 or another display may have dedicated areas to display high reliability information that may not be reconfigured. For example, the ECU information displayed on ICD 300 may be fixed, but the remaining display area may be configured by a multi-core processing environment. For example, a navigation application and weather application may be displayed in the display area or areas of ICD 300 not dedicated to high reliability information.

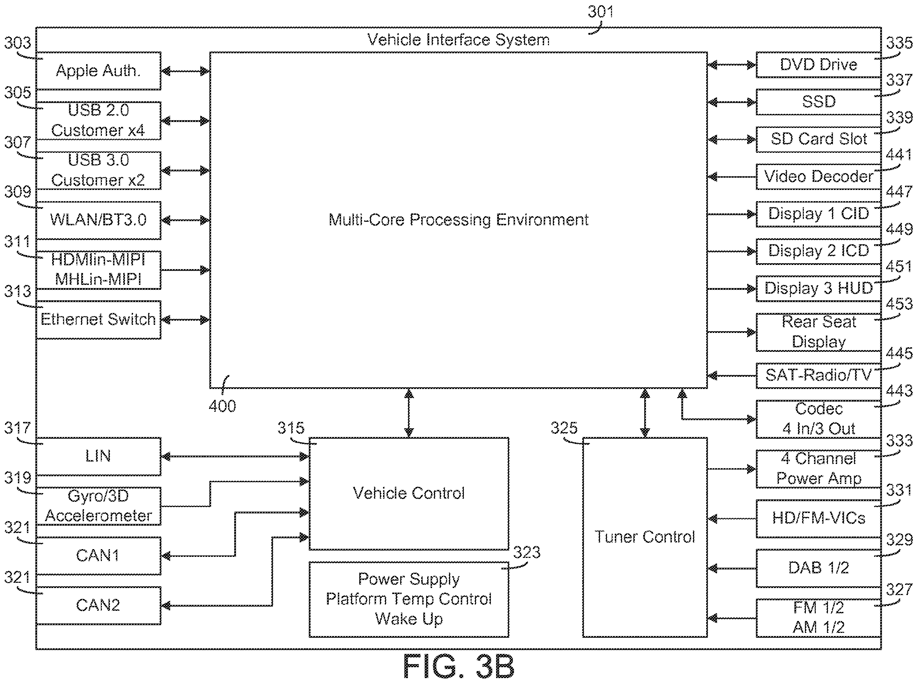

In some embodiments, a vehicle interface system manages the connections between display devices for the ICD, CID, HUD, and other displays (e.g., rear seat passenger displays, passenger dashboard displays, etc.). The vehicle interface system may include connections between output devices such as displays, input devices, and the hardware related to the multi-core processing environment. Such a vehicle interface system is described in greater detail with reference to FIG. 3B.

Referring now to FIG. 3B, a vehicle interface system 301 is shown, according to an exemplary embodiment. Vehicle interface system 301 includes connections between a multi-core processing environment 400 and input/output devices, connections, and/or elements. Multi-core processing environment 400 may provide the system architecture for an in-vehicle audio-visual system, as previously described. Multi-core processing environment 400 may include a variety of computing hardware components (e.g., processors, integrated circuits, printed circuit boards, random access memory, hard disk storage, solid state memory storage, communication devices, etc.). In some embodiments, multi-core processing environment 400 manages various inputs and outputs exchanged between applications running within multi-core processing environment 400 and/or various peripheral devices (e.g., devices 303-445) according to the system architecture. Multi-core processing environment 400 may perform calculations, run applications, manage vehicle interface system 301, preform general processing tasks, run operating systems, etc.

Multi-core processing environment 400 may be connected to connector hardware which allows multi-core processing environment 400 to receive information from other devices or sources and/or send information to other devices or sources. For example, multi-core processing environment 400 may send data to or receive data from portable media devices, data storage devices, servers, mobile phones, etc. which are connected to multi-core processing environment 400 through connector hardware. In some embodiments, multi-core processing environment 400 is connected to an apple authorized connector 303. Apple authorized connector 303 may be any connector for connection to an APPLE® product. For example, apple authorized connector 303 may be a firewire connector, 30-pin APPLE® device compatible connector, lightning connector, etc.

In some examples, multi-core processing environment 400 is connected to a Universal Serial Bus version 2.0 ("USB 2.0") connector 305. USB 2.0 connector 305 may allow for connection of one or more device or data sources. For example, USB 2.0 connector 305 may include four female connectors. In other examples, USB 2.0 connector 305 includes one or more male connectors. In some examples, multi-core processing environment 400 is connected with a Universal Serial Bus version 3.0 ("USB 3.0") connector 307. As described with reference to USB 2.0 connector 305, USB 3.0 connector 307 may include one or more male or female connections to allow compatible devices to connect.

In some embodiments, multi-core processing environment 400 is connected to one or more wireless communications connections 309. Wireless communications connection 309 may be implemented with additional wireless communications devices (e.g., processors, antennas, etc.). Wireless communications connection 309 allows for data transfer between multi-core processing environment 400 and other devices or sources. For example, wireless communications connection 309 may allow for data transfer using infrared communication, Bluetooth communication such as Bluetooth 3.0, ZigBee communication, Wi-Fi communication, communication over a local area network and/or wireless local area network, etc.

In some embodiments, multi-core processing environment 400 is connected to one or more video connectors 311. Video connector 311 allows for the transmission of video data between devices/sources and multi-core processing environment 400 is connected. For example, video connector 311 may be a connector or connection following a standard such as High-Definition Multimedia Interface (HDMI), Mobile High-definition Link (MHL), etc. In some embodiments, video connector 311 includes hardware components which facilitate data transfer and/or comply with a standard. For example, video connector 311 may implement a standard using auxiliary processors, integrated circuits, memory, a mobile Industry Processor Interface, etc.

In some embodiments, multi-core processing environment 400 is connected to one or more wired networking connections 313. Wired networking connections 313 may include connection hardware and/or networking devices. For example, wired networking connection 313 may be an Ethernet switch, router, hub, network bridge, etc.

Multi-core processing environment 400 may be connected to a vehicle control 315. In some embodiments, vehicle control 315 allows multi-core processing environment 400 to connect to vehicle control equipment such as processors, memory, sensors, etc. used by the vehicle. For example, vehicle control 315 may connect multi-core processing environment 400 to an engine control unit, airbag module, body controller, cruise control module, transmission controller, etc. In other embodiments, multi-core processing environment 400 is connected directly to computer systems, such as the ones listed. In such a case, vehicle control 315 is the vehicle control system including elements such as an engine control unit, onboard processors, onboard memory, etc. Vehicle control 315 may route information form additional sources connected to vehicle control 315. Information may be routed from additional sources to multi-core processing environment 400 and/or from multi-core processing environment 400 to additional sources.

In some embodiments, vehicle control 315 is connected to one or more Local Interconnect Networks (LIN) 317, vehicle sensors 319, and/or Controller Area Networks (CAN) 321. LIN 317 may follow the LIN protocol and allow communication between vehicle components. Vehicle sensors 319 may include sensors for determining vehicle telemetry. For example, vehicle sensors 319 may be one or more of gyroscopes, accelerometers, three dimensional accelerometers, inclinometers, etc. CAN 321 may be connected to vehicle control 315 by a CAN bus. CAN 321 may control or receive feedback from sensors within the vehicle. CAN 321 may also be in communication with electronic control units of the vehicle. In other embodiments, the functions of vehicle control 315 may be implemented by multi-core processing environment 400. For example, vehicle control 315 may be omitted and multi-core processing environment 400 may connect directly to LIN 317, vehicle sensors 319, CAN 321, or other components of a vehicle.

In some examples, vehicle interface system 301 includes a systems module 323. Systems module 323 may include a power supply and/or otherwise provide electrical power to vehicle interface system 301. Systems module 323 may include components which monitor or control the platform temperature. Systems module 323 may also perform wake up and/or sleep functions.

Still referring to FIG. 3B, multi-core processing environment 400 may be connected to a tuner control 325. In some examples, tuner control 325 allows multi-core processing environment 400 to connect to wireless signal receivers. Tuner control 325 may be an interface between multi-core processing environment 400 and wireless transmission receivers such as FM antennas, AM antennas, etc. Tuner control 325 may allow multi-core processing environment 400 to receive signals and/or control receivers. In other examples, tuner control 325 includes wireless signal receivers and/or antennas. Tuner control 325 may receive wireless signals as controlled by multi-core processing environment 400. For example, multi-core processing environment 400 may instruct tuner control 325 to tune to a specific frequency.

In some examples, tuner control 325 is connected to one or more FM and AM sources 327, Digital Audio Broadcasting (DAB) sources 329, and/or one or more High Definition (HD) radio sources 331. FM and AM source 327 may be a wireless signal. In some examples, FM and AM source 327 may include hardware such as receivers, antennas, etc. DAB source 329 may be a wireless signal utilizing DAB technology and/or protocols. In other examples, DAB source 329 may include hardware such as an antenna, receiver, processor, etc. HD radio source 331 may be a wireless signal utilizing HD radio technology and/or protocols. In other examples, HD radio source 331 may include hardware such as an antenna, receiver, processor, etc.

In some examples, tuner control 325 is connected to one more amplifiers 333. Amplifier 333 may receive audio signals from tuner control 325. Amplifier 333 amplifies the signal and outputs it to one or more speakers. For example, amplifier 333 may be a four channel power amplifier connected to one or more speakers (e.g., 4 speakers). In some examples, multi-core processing environment 400 may send an audio signal (e.g., generated by an application within multi-core processing environment 400) to tuner control 325, which in turn sends the signal to amplifier 333.

Still referring to FIG. 3B, multi-core processing environment 400 may connected to connector hardware 335-445 which allows multi-core processing environment 400 to receive information from media sources and/or send information to media sources. In other embodiments, multi-core processing environment 400 may be directly connected to media sources, have media sources incorporated within multi-core processing environment 400, and/or otherwise receive and send media information.

In some examples, multi-core processing environment 400 is connected to one or more DVD drives 335. DVD drive 335 provides DVD information to multi-core processing environment 400 from a DVD disk inserted into DVD drive 335. Multi-core processing environment 400 may control DVD drive 335 through the connection (e.g., read the DVD disk, eject the DVD disk, play information, stop information, etc.) In further examples, multi-core processing environment 400 uses DVD drive 335 to write data to a DVD disk.

In some examples, multi-core processing environment 400 is connected to one or more Solid State Drives (SSD) 337. In some examples, multi-core processing environment 400 is connected directly to SSD 337. In other examples, multi-core processing environment 400 is connected to connection hardware which allows the removal of SSD 337. SSD 337 may contain digital data. For example, SSD 337 may include images, videos, text, audio, applications, etc. stored digitally. In further examples, multi-core processing environment 400 uses its connection to SSD 337 in order to store information on SSD 337.

In some examples, multi-core processing environment 400 is connected to one or more Secure Digital (SD) card slots 339. SD card slot 339 is configured to accept an SD card. In some examples, multiple SD card slots 339 are connected to multi-core processing environment 400 that accept different sizes of SD cards (e.g., micro, full size, etc.). SD card slot 339 allows multi-core processing environment 400 to retrieve information from an SD card and/or to write information to an SD card. For example, multi-core processing environment 400 may retrieve application data from the above described sources and/or write application data to the above described sources.

In some examples, multi-core processing environment 400 is connected to one or more video decoders 441. Video decoder 441 may provide video information to multi-core processing environment 400. In some examples, multi-core processing environment 400 may provide information to video decoder 441 which decodes the information and sends it to multi-core processing environment 400.

In some examples, multi-core processing environment 400 is connected to one or more codecs 443. Codecs 443 may provide information to multi-core processing environment 400 allowing for encoding or decoding of a digital data stream or signal. Codec 443 may be a computer program running on additional hardware (e.g., processors, memory, etc.). In other examples, codec 443 may be a program run on the hardware of multi-core processing environment 400. In further examples, codec 443 includes information used by multi-core processing environment 400. In some examples, multi-core processing environment 400 may retrieve information from codec 443 and/or provide information (e.g., an additional codec) to codec 443.

In some examples, multi-core processing environment 400 connects to one or more satellite sources 445. Satellite source 445 may be a signal and/or data received from a satellite. For example, satellite source 445 may be a satellite radio and/or satellite television signal. In some examples, satellite source 445 is a signal or data. In other examples, satellite source 445 may include hardware components such as antennas, receivers, processors, etc.

Still referring to FIG. 3B, multi-core processing environment 400 may be connected to input/output devices 441-453. Input/output devices 441-453 may allow multi-core processing environment 400 to display information to a user. Input/output devices 441-453 may also allow a user to provide multi-core processing environment 400 with control inputs.

In some examples, multi-core processing environment 400 is connected to one or more CID displays 447. Multi-core processing environment 400 may output images, data, video, etc. to CID display 447. For example, an application running within multi-core processing environment 400 may output to CID display 447. In some examples, CID display 447 may send input information to multi-core processing environment 400. For example, CID display 447 may be touch enabled and send input information to multi-core processing environment 400.

In some examples, multi-core processing environment 400 is connected to one or more ICD displays 449. Multi-core processing environment 400 may output images, data, video, etc. to ICD display 449. For example, an application running within multi-core processing environment 400 may output to ICD display 449. In some examples, ICD display 449 may send input information to multi-core processing environment 400. For example, ICD display 449 may be touch enabled and send input information to multi-core processing environment 400.

In some examples, multi-core processing environment 400 is connected to one or more HUD displays 451. Multi-core processing environment 400 may output images, data, video, etc. to HUD displays 451. For example, an application running within multi-core processing environment 400 may output to HUD displays 451. In some examples, HUD displays 451 may send input information to multi-core processing environment 400.

In some examples, multi-core processing environment 400 is connected to one or more rear seat displays 453. Multi-core processing environment 400 may output images, data, video, etc. to rear seat displays 453. For example, an application running within multi-core processing environment 400 may output to rear seat displays 453. In some examples, rear seat displays 453 may send input information to multi-core processing environment 400. For example, rear seat displays 453 may be touch enabled and send input information to multi-core processing environment 400.

In further embodiments, multi-core processing environment 400 may also receive inputs from other sources. For example multi-core processing environment 400 may receive inputs from hard key controls (e.g., buttons, knobs, switches, etc.). In some embodiments, multi-core processing environment 400 may also receive inputs from connected devices such as personal media devices, mobile phones, etc. In additional embodiments, multi-core processing environment 400 may output to these devices.

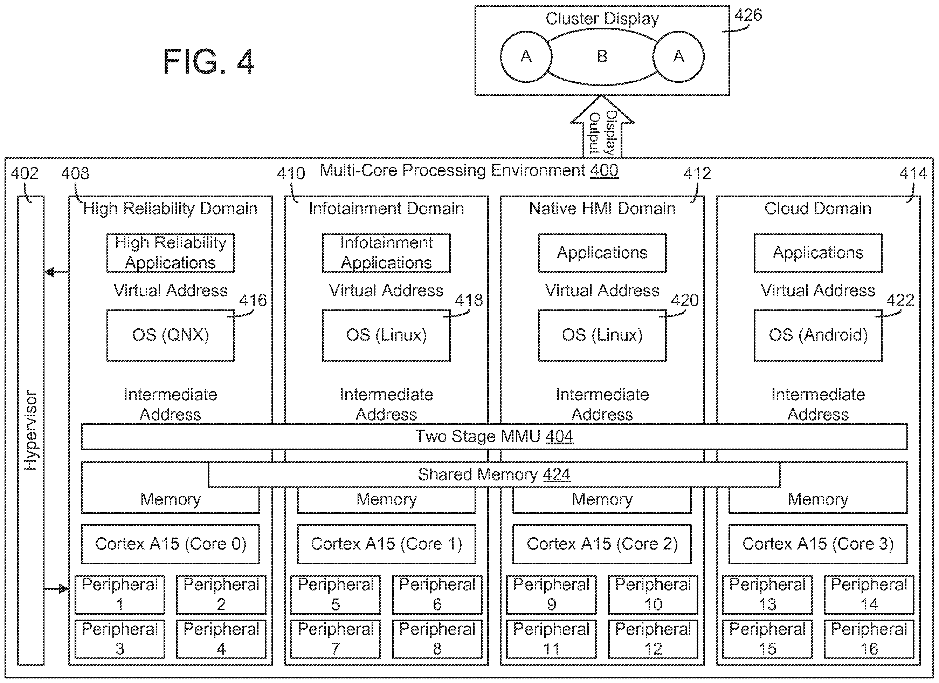

Referring now to FIG. 4, a block diagram illustrating multi-core processing environment 400 in greater detail is shown, according to an exemplary embodiment. In some embodiments, multi-core processing environment 400 is implemented using a system-on-a-chip and/or using an ARMv7-A architecture. In other embodiments, multi-core processing environment 400 may include a multi-core processor that is not a system-on-a-chip to provide the same or a similar environment. For example, a multi-core processor may be a general computing multi-core processor on a motherboard supporting multiple processing cores. In further embodiments, multi-core processing environment 400 may be implemented using a plurality of networked processing cores. In one embodiment, multi-core processing environment 400 may be implemented using a cloud computing architecture or other distributed computing architecture.

Multi-core processing environment 400 is shown to include a hypervisor 402. Hypervisor 402 may be integrated with a bootloader or work in conjunction with the bootloader to help create the multi-core processing environment 400 during boot. The system firmware (not shown) can start the bootloader (e.g., U-Boot) using a first CPU core (core 0). The bootloader can load the kernel images and device trees from a boot partition for the guest OSs. Hypervisor 402 can then initialize the data structures used for the guest OS that will run on core 1. Hypervisor 402 can then boot the guest OS for core 1. Hypervisor 402 can then switch to a hypervisor mode, initialize hypervisor registers, and hand control over to a guest kernel. On core 0, hypervisor 402 can then do the same for the guest that will run on core 0 (i.e., initialize the data structures for the guest, switch to the hypervisor mode, initialize hypervisor registers, and hand off control to the guest kernel for core 0). After bootup, the distinction between a primary core and a secondary core may be ignored and hypervisor 402 may treat the two cores equally. Traps may be handled on the same core as the guest that triggered them.

In FIG. 4, multi-core processing environment 400 is shown in a state after setup is conducted by hypervisor 402 and after the guest OSs are booted up to provide domains 408-414. Domains 408-414 can each be responsible for outputting certain areas or windows of a display system such as cluster display 426. In some embodiments, cluster display 426 may be an ICD. Cluster display 426 is illustrated as having display areas A and B. High reliability domain 408 may be associated with display areas A. Display areas A may be used to display safety-critical information such as vehicle speed, engine status, vehicle alerts, tire status, or other information from the ECU. The information for display areas A may be provided entirely by domain 408. Display area B may represent a music player application user interface provided by display output generated by infotainment core 410. Cloud domain 414 may provide an internet-based weather application user interface in display area B. Advantageously, system instability, crashes, or other unexpected problems, which may exist in the cloud domain 414 or with the music player running in infotainment core 410, may be completely prevented from impacting or interrupting the operation of display area A or any other process provided by the high reliability domain 408.

Each guest OS may have its own address space for running processes under its operating system. A first stage of a two stage memory management unit (MMU) 404 may translate the logical address used by the guest OS and its applications to physical addresses. This address generated by MMU 404 for the guest OS may be an intermediate address. The second stage of the two stage MMU 404 may translate those intermediate addresses from each guest to actual physical addresses. In addition to being used to map areas of memory to particular guest OSs (and thus particular domains and cores), the second stage of MMU 404 can dedicate memory mapped peripheral devices to particular domains (and thus guest OSs and cores) as shown in FIG. 4.

Hypervisor 402 may be used in configuring the second stage of MMU 404. Hypervisor 402 may allocate physical memory areas to the different guests. Defining these mappings statically during the configuration time helps ensure that the intermediate-to-physical memory mapping for every guest is defined in such a way that they cannot violate each other's memory space. The guest OS provides the first stage memory mapping from the logical to the intermediate memory space. The two stage MMU 404 allows the guest OS to operate as it normally would (i.e., operate as if the guest OS had ownership of the memory mapping), while allowing an underlying layer of mapping to ensure that the different guest OSs (i.e., domains) remain isolated from each other.

As illustrated in FIG. 4, while sharing the same display (cluster display 426) and sharing much of the same hardware (e.g., a system-on-a-chip), the architecture of FIG. 4 provides for partitioning between domains. The architecture shown in FIG. 4 provides a computer system for integration with a vehicle user interface (e.g., input devices, display 426). In some embodiments, multi-core processing environment 400 includes a multi-core processor. Multi-core processing environment 400 may be configured to provide virtualization for a first guest operating system (e.g., QNX OS 416) in a first core (e.g., Core 0) or cores of the multi-core processor. Multi-core processing environment 400 may be configured to provide virtualization for at least a second guest operating system (e.g., Linux OS 418) in a second and different core (e.g., Core 1) or cores of the multi-core processor. The first guest operating system (e.g., "real time" QNX OS 416) may be configured for high reliability operation. The dedication of an operating system to its own core using asymmetric multi-processing (AMP) to provide the virtualization advantageously helps to prevent operations of the second guest operating system (e.g., Linux OS 418) from disrupting the high reliability operation of the first guest operating system (e.g., QNX OS 416).

The high reliability domain 408 can have ECU inputs as one or more of its assigned peripherals. For example, the ECU may be Peripheral 1 assigned to high reliability domain 408. Peripheral 2 may be another vehicle hardware device such as the vehicle's controller area network (CAN). Given the partitioning between domains, infotainment domain 410, native HMI domain 412, and cloud domain 414 may not be able to directly access the ECU or the CAN. If ECU or CAN information is used by other domains (e.g., 410, 414) the information can be retrieved by high reliability domain 408 and placed into shared memory 424.

In an exemplary embodiment, multiple separate screens such as cluster display 426 can be provided with the system such that each screen contains graphical output from one or more of the domains 408-414. One set of system peripherals (e.g., an ECU, a Bluetooth module, a hard drive, etc.) may be used to provide one or multiple screens using a single multi-core system on a chip. The domain partitioning described herein can effectively separate the safety related driver information operating system (e.g., high reliability domain 408) from the infotainment operating system (e.g., infotainment domain 410), the internet/app operating system, and/or the cloud operating system (e.g., cloud domain 414).

Various operating systems can generate views of their applications to be shown on screens with other operating domains. Different screens may be controlled by different domains. For example, the cluster display 426 may primarily be controlled by high reliability domain 408. Despite this control, views from domains 410, 414 can be shown on the cluster display 426. A shared memory 424 may be used to provide the graphic views from the domains 410, 414 to the domain 408. Particularly, pixel buffer content may be provided to the shared memory 424 from domains 410, 414 for use by domain 408. In an exemplary embodiment, a native HMI domain 412 (e.g., having a linux OS 420) is used to coordinate graphical output, constructing display output using pixel buffer content from each of domains 408, 410, and 414. Advantageously, because a single system is used to drive multiple displays and bring together multiple domains, the user may be able to configure which domain or application content will be shown where (e.g., cluster display, center stack display, HUD display, rear seat display, etc.). Various graphic outputs generated by domains 408-414 are described in greater detail in subsequent figures.

In some embodiments, on-board peripherals are assigned to particular operating systems. The on-board peripherals might include device ports (GPIO, I2C, SPI, UART), dedicated audio lines (TDM, I2S) or more other controllers (Ethernet, USB, MOST). Each OS is able to access the I/O devices directly. I/O devices are thus assigned to individual OSs. The second stage memory management unit (MMU) 404 maps intermediate addresses assigned to the different operating systems/domains to the peripherals.

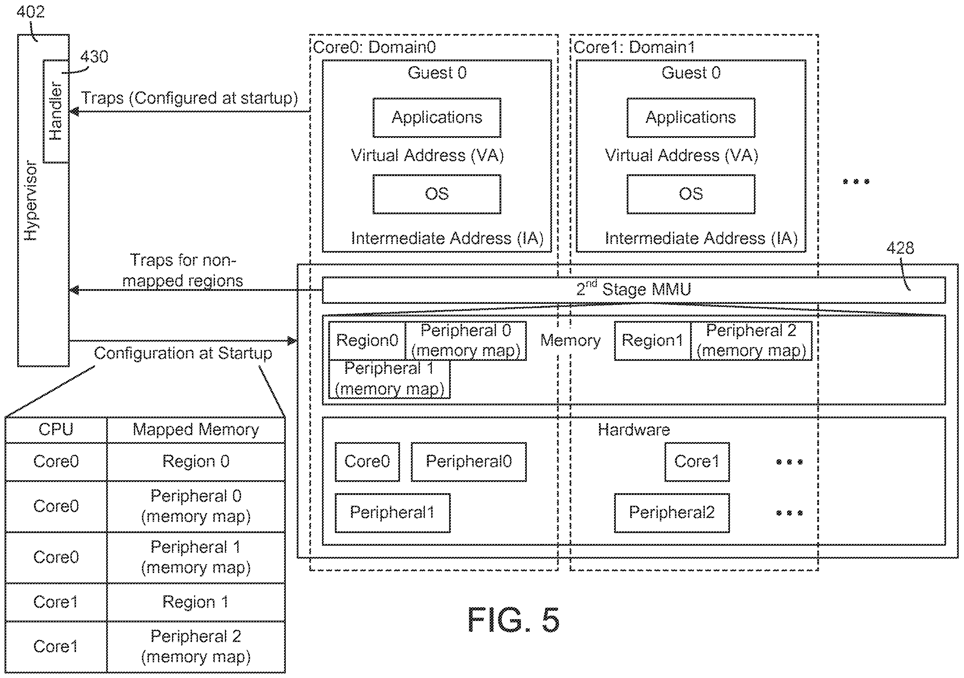

Referring to FIG. 5, a block diagram illustrating the use of a second stage MMU 428 to allocate devices to individual guest OSs on particular domains is shown, according to an exemplary embodiment. Second stage MMU 428 may be a component of two stage MMU 424, as described with reference to FIG. 4. Hypervisor 402 is shown configuring second stage MMU 428 during boot. Hypervisor 402 may setup page tables for second stage MMU 428, translating intermediate addresses (IA) to physical addresses (PA). In some examples, second stage MMU 428 can map any page (e.g., a 4 kB page) from the IPA space to any page from the PA space. The mapping can be specified as read-write, read-only, write-only, or to have other suitable permissions. To setup the page tables, hypervisor 402 can use memory range information available in hypervisor 402's device tree. This arrangement advantageously provides a single place to configure what devices are assigned to a guest and both hypervisor 402 and the guest kernel can use the device tree.

A simplified example of the mapping conducted by hypervisor 402 at startup is shown in FIG. 5. Core 0 may be assigned memory region 0, memory mapped peripheral 0, and memory map peripheral 1. Core 1 is assigned memory region 1 and peripheral 2. The configuration would continue such that each core is assigned with the memory mapped regions specified in its OSs device tree. When a guest domain attempts to access pages that are unmapped according to the page table managed by second stage MMU 428, the processor core for the guest may raise an exception, thereby activating hypervisor 402 and invoking the hypervisor 402's trap handler 430 for data or instruction abort handling. In an exemplary embodiment, there is a 1:1 mapping of operating systems to CPU cores and no scheduling is conducted by the hypervisor. Advantageously, these embodiments reduce the need for virtual interrupt management and the need for a virtual CPU interface. When a normal interrupt occurs, each CPU can directly handle that interrupt with its guest OS.

Hypervisor 402 may support communication between two guest operating systems running in different domains. As described above, shared memory is used for such communications. When a particular physical memory range is specified in the device tree of two guests, that memory range is mapped to both cores and is accessible as shared memory. For interrupts between guest OSs, an interrupt controller is used to assert and clear interrupt lines. According to an exemplary embodiment, the device tree for each virtual device in the kernel has a property "doorbells" that describes what interrupts to trigger for communication with the other core. The doorbell is accessed using a trapped memory page, whose address is also described in the device tree. On the receiving end, the interrupt is cleared using the trapped memory page. This enables interrupt assertion and handling without any locking and with relatively low overhead compared to traditional device interrupts.

In an exemplary embodiment, guest operating systems are not allowed to reset the whole system. Instead, the system is configured to support the resetting of an individual guest (e.g., to recover from an error situation). Hypervisor 402 can create a backup copy of the guest operating system's kernel and device tree and to store the information in a hypervisor-protected memory area. When the guest attempts to reset the system, a hypervisor trap will initiate a guest reset. This guest reset will be conducted by restoring the kernel and device tree from the backup copy, reinitializing the assigned core's CPU state, and then handling control back to the guest for bootup of the guest.

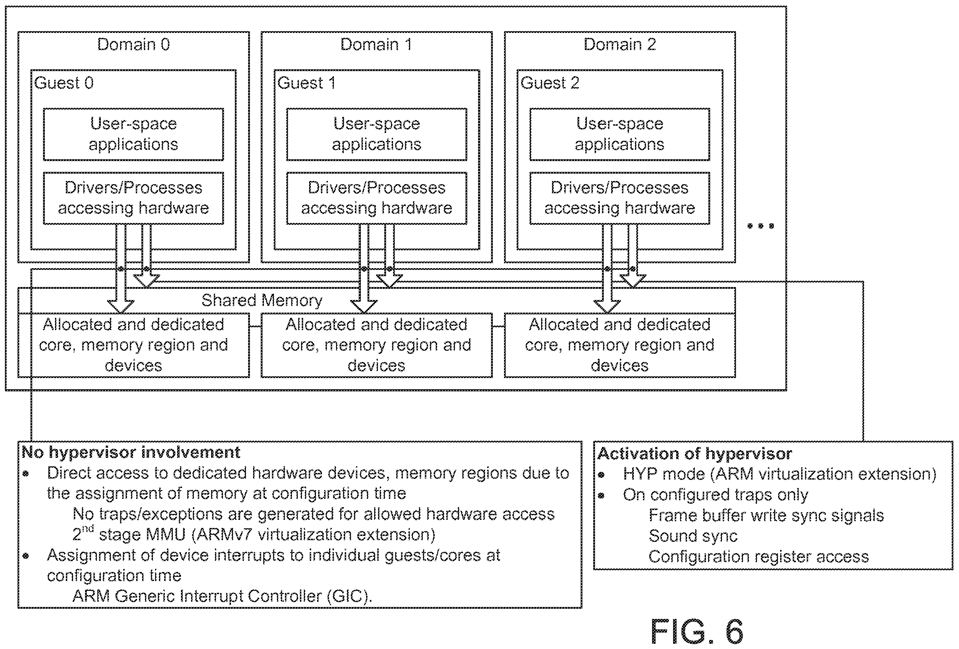

Referring now to FIGS. 4-6, once hypervisor 402 performs the initial configuration and allocation of resources, hypervisor 402 may become dormant during normal operation. Hypervisor 402 may become active only when an unexpected trap occurs. This aspect of hypervisor 402 is variously illustrated in each of FIGS. 4, 5 and 6. As illustrated in FIG. 6, there is no hypervisor involvement in a guest OS's direct access to dedicated hardware devices or memory regions due to the assignment of the memory at configuration time (see FIG. 5). A hypervisor access mode ("HYP" mode on some ARM processors such as the Cortex A15) can access the hardware platform under a higher privilege level than any individual guest OS. The hypervisor, running in the high privilege HYP mode can control traps received. These traps can include frame buffer write synchronization signals, sound synchronization signals, or access to configuration registers (e.g., clock registers, coprocessor registers).

In an exemplary embodiment, hypervisor 402 is not involved in regular interrupt distribution. Rather, an interrupt controller (e.g., a Generic Interrupt Controller on some ARM chips) can handle the delivery to the proper core. Hypervisor 402 can configure the interrupt controller during boot. As described above, the inter-guest OS communication is based on shared memory and interrupts. Traps and write handlers are configured to send interrupts between the cores.

As illustrated in FIG. 6, device interrupts may be assigned to individual guest OSs or cores at configuration time by hypervisor 402. During initialization, hypervisor 402 can run an interrupt controller (e.g., GIC) setup which can set values useful during bootup. As each guest gets booted, hypervisor 402 can read the interrupt assignments from the guest's device tree. Hypervisor 402 can add an interrupt read in such a manner to an IRQ map that is associated with the proper CPU core. This map may be used by the distributor during runtime. Hypervisor 402 can then enable the interrupt for the proper CPU core. Whenever a guest OS attempts to access the distributor, a trap may be registered. Reads to the distributor may not be trapped, but are allowed from any guest OS. Write accesses to the distributor are trapped and the distributor analyzes whether the access should be allowed or not.

In an exemplary embodiment, the system provides full hardware virtualization. There is no need for para-virtualized drivers for I/O access as each guest can access its dedicated peripherals directly. A portion of the memory not allocated to the individual domains can be kept for hypervisor code and kernel images. This memory location will not be accessible by any guest OS. Kernel images are loaded into this memory as backup images during the boot process. Hypervisor 402 may be trapped on reset to reboot the individual OSs.

In the case of crash of an individual guest OS, this property advantageously allows the remainder of the system to function while the crashed OS is able to reboot without affecting the other OSs. In an exemplary embodiment, no meta-data is allowed from the non-secure domain to the secure domain. For example, with reference to FIG. 4, the transfer of meta-data is not allowed from the cloud domain 414 to the high reliability domain 408. No interface access (e.g., remote procedure calls) of the secure guest (i.e., the high reliability domain) are allowed.

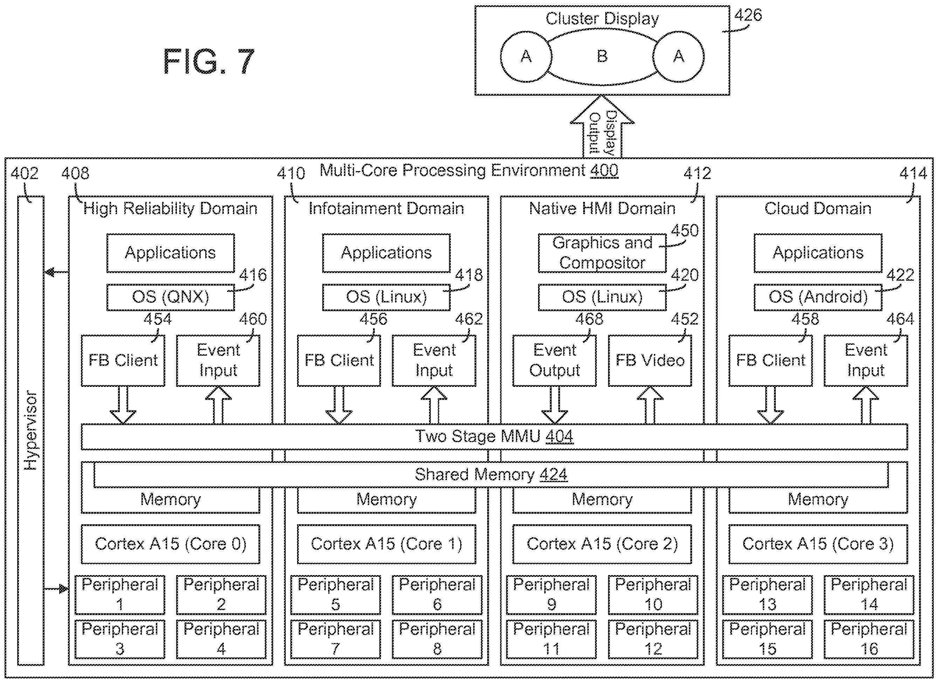

Referring now to FIG. 7, an illustration of system components to facilitate display output on a common display system is shown, according to an exemplary embodiment. As shown in FIG. 7, the native HMI domain 412 includes a graphics and compositor component 450. Graphics and compositor component 450 generally serves to combine frame buffer information (i.e., graphic data) provided to it by the other domains (e.g., 408, 410, 414) and/or generated by itself (i.e., on native HMI domain 412). This flow of data is highlighted in FIG. 7. Native HMI domain 412 is shown to include a frame buffer ("FB") video module 452 while the other domains each contain a frame buffer client module (i.e., FB clients 454, 456, 458).

In an exemplary embodiment, hypervisor 402 provides virtual devices that enable efficient communications between the different virtual machines (guest OSs) in the form of shared memory and interrupts. FB client modules 454, 456, 458 and FB video module 452 may be Linux (or QNX) kernel modules for virtual devices provided by hypervisor 402, thereby exposing the functionality to the user space of the guest OSs. In an exemplary embodiment, instead of providing raw access to the memory area, modules 452-458 implement slightly higher level APIs such as Linux frame buffer, Video for Linux 2, evdev, ALSA, and network interfaces. This has the advantage that existing user space software such as user space of Android can be used without modification.

In an exemplary embodiment, the virtual devices provided by the hypervisor 402 use memory-mapped I/O. Hypervisor 402 can initialize the memory regions using information from a device tree. The devices can use IRQ signals and acknowledgements to signal and acknowledge inter-virtual machine interrupts, respectively. This can be achieved by writing to the register area which is trapped by hypervisor 402. An example of a device tree entry for a virtual device with 16M of shared memory, an interrupt, and a doorbell is shown below. In some embodiments, writing into the doorbell register triggers and interrupt in the target virtual machine:

```
       mosx-example@f1000000 {
              compatible = "mosx-example", "ivmc";
              reg = <0xf0100000 0x1000>,
                          <0xf1000000 0x1000000>;
              interrupts = <0 145 4>;
              doorbells = <144>;
       };
```

Each domain may utilize a kernel module or modules representing a display and an input device. For domains 408, 410, 414, the module or modules provide a virtual framebuffer (e.g., FB client 454, 456, 458) and a virtual input device (e.g., event input 460, 462, 464). For the compositor domain (e.g., domain 412) a kernel module or module exists to provide a virtual video input 452 and a virtual event output device 468. Memory is dedicated for each domain to an event buffer and a framebuffer. The pixel format for the framebuffer may be, e.g., ARGB32. Interrupts may be used between the modules to, for example, signal that an input event has been stored in a page of the shared memory area. Upon receiving the interrupt, the virtual device running on the receiving domain may then get the input event from shared memory and provide it to the userspace for handling.

On the video side, a buffer page may be populated by a FB client and, when a user space fills a page, a signal IRQ can be provided to the compositor. The compositor can then get the page from shared memory and provide it to any user space processes waiting for a new frame. In this way, native HMI domain 412 can act as a server for the purpose of graphics and as a client for the purpose of input handling. Inputs (e.g., touch screen inputs, button inputs, etc.) are provided by the native HMI 412 domain's event output 468 to the appropriate event input 460, 462, 464. Frame buffers are filled by the domains 408, 410, 414 and their FB clients 454, 456, 458 provide the frame buffer content to the native HMI domain using frame buffer video 452.

Both events and frame buffer content are passed from domain to domain using shared memory. Each guest operating system or domain therefore prepares its own graphical content (e.g., a music player application prepares its video output) and this graphical content is provided to the compositor for placing the various graphics content from the various domain at the appropriate position on the combined graphics display output. Referring to cluster display 426, for example, applications on high reliability domain 408 may create graphics for spaces A on the display 426. Such graphics content may be provided to FB client 454 and then to FB video 452 via shared memory 424.

Graphics content from the infotainment domain can be generated by applications running on that domain. The domain can populate FB client 456 with such information and provide the frame buffer content to FB video 452 via shared memory 424. With frame buffer content from domain 408 and 410, the compositor can cause the display of the combined scene on cluster display 426. Such graphical display advantageously occurs without passing any code or metadata from user space to user space. The communication of graphics and event information may be done via interrupt-based inter-OS communication. Advantageously, each core/OS may operate as it would normally using asymmetric multiprocessing. Hypervisor 402 may not conduct core or OS scheduling. No para-virtualization is present, which provides a high level of security, isolation and portability.

Virtual networking interfaces can also be provided for use by each domain. To the OS user space it appears as a regular network interface with a name and MAC address (configurable in a device tree). The shared memory may include a header page and two buffers for the virtual networking interface. The first buffer can act as a receive buffer for a first guest and as a send buffer for the second guest. The second buffer is used for the inverse role (as a send buffer for the first guest and as a receive buffer for the second guest). The header can specify the start and end offset of a valid data area inside the corresponding buffer. The valid data area can include a sequence of packets. A single interrupt may be used to signal the receiving guest that a new packet has been written to the buffer. More specifically, the transmitting domain writes the packet size, followed by the packet data to a send buffer in the shared memory. On the incoming side, an interrupt signals the presence of incoming packets. The packets received by the system are read and forwarded to the guest OS's network subsystem by the receiving domain. One of the domains can control the actual and reception by the hardware component. A virtual sound card can be present in the system. The playback and capture buffers can operate in a manner similar to that provided by the client/server frame buffers described with reference to FIG. 7.

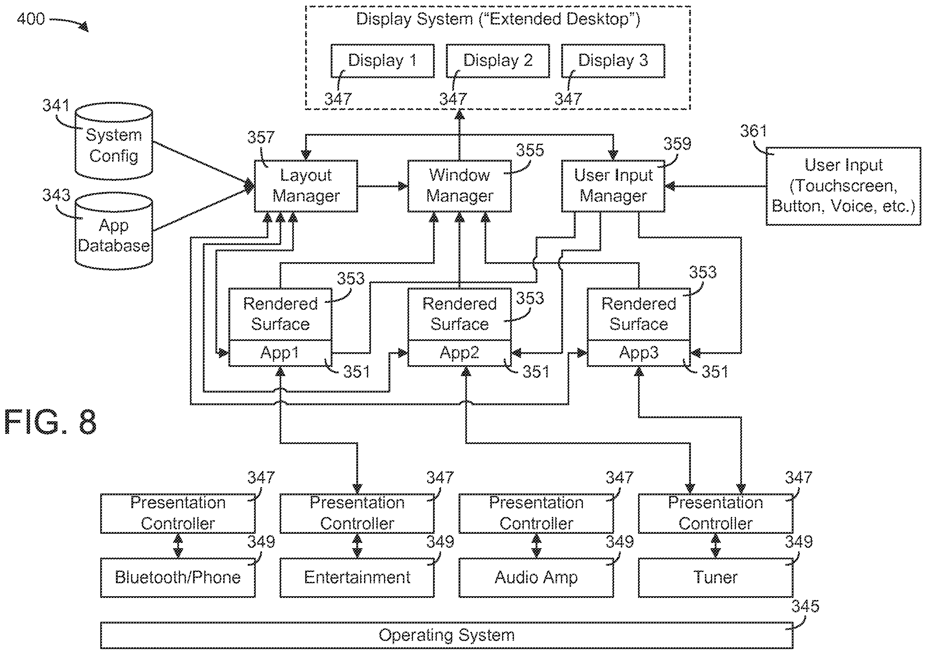

Referring now to FIG. 8, various operational modules running within multi-core processing environment 400 are shown, according to an exemplary embodiment. The operational modules are used in order to generate application images (e.g., graphic output) for display on display devices within the vehicle. Application images may include frame buffer content. The operational modules may be computer code stored in memory and executed by computing components of multi-core processing environment 400 and/or hardware components. The operational modules may be or include hardware components. In some embodiments, the operational modules illustrated in FIG. 8 are implemented on a single core of multi-core processing environment 400. For example, native HMI domain 412 as illustrated in FIG. 4 may include the operational modules discussed herein. In other embodiments, the operating modules discussed herein may be executed and/or stored on other domains and/or on multiple domains.

In some embodiments, multi-core processing environment 400 includes system configuration module 341. System configuration module 341 may store information related to the system configuration. For example, system configuration module 341 may include information such as the number of connected displays, the type of connected displays, user preferences (e.g., favorite applications, preferred application locations, etc.), default values (e.g., default display location for applications), etc.

In some embodiments, multi-core processing environment 400 includes application database module 343. Application database module 343 may contain information related to each application loaded and/or running in multi-core processing environment 400. For example, application database module 343 may contain display information related to a particular application (e.g., item/display configurations, colors, interactive elements, associated images and/or video, etc.), default or preference information (e.g., whitelist" or "blacklist" information, default display locations, favorite status, etc.), etc.

In some embodiments, multi-core processing environment 400 includes operating system module 345. Operating system module 345 may include information related to one or more operating systems running within multi-core processing environment 400. For example, operating system module 345 may include executable code, kernel, memory, mode information, interrupt information, program execution instructions, device drivers, user interface shell, etc. In some embodiments, operating system module 345 may be used to manage all other modules of multi-core processing environment 400.

In some embodiments, multi-core processing environment 400 includes one or more presentation controller modules 347. Presentation controller module 347 may provide a communication link between one or more component modules 349 and one or more application modules 351. Presentation controller module 347 may handle inputs and/or outputs between component module 349 and application module 351. For example, presentation controller 347 may route information form component module 349 to the appropriate application. Similarly, presentation controller 347 may route output instructions from application module 351 to the appropriate component module 349. In some embodiments, presentation controller module 347 may allow multi-core processing environment 400 to preprocess data before routing the data. For example presentation controller 347 may convert information into a form that may be handled by either application module 351 or component module 349.

In some embodiments, component module 349 handles input and/or output related to a component (e.g., mobile phone, entertainment device such as a DVD drive, amplifier, signal tuner, etc.) connected to multi-core processing environment 400. For example, component module 349 may provide instructions to receive inputs from a component. Component module 349 may receive inputs from a component and/or process inputs. For example, component module 349 may translate an input into an instruction. Similarly, component module 349 may translate an output instruction into an output or output command for a component. In other embodiments, component module 349 stores information used to perform the above described tasks. Component module 349 may be accessed by presentation controller module 347. Presentation controller module 347 may then interface with an application module 351 and/or component.

Application module 351 may run an application. Application module 351 may receive input from presentation controller 347, window manager 355, layout manager 357, and/or user input manager 359. Application module 351 may also output information to presentation controller 347, window manager 355, layout manager 357, and/or user input manager 359. Application module 351 performs calculations based on inputs and generates outputs. The outputs are then sent to a different module. Examples of applications include a weather information application which retrieves weather information and displays it to a user, a notification application which retrieves notifications from a mobile device and displays them to a user, a mobile device interface application which allows a user to control a mobile device using other input devices, games, calendars, video players, music streaming applications, etc. In some embodiments, application module 351 handles events caused by calculations, processes, inputs, and/or outputs. Application module 351 may handle user input and/or update an image to be displayed (e.g., rendered surface 353) in response. Application module 351 may handle other operations such as exiting an application launching an application, etc.

Application module 351 may generate one or more rendered surfaces 353. A rendered surface is the information which is displayed to a user. In some embodiments, rendered surface 353 includes information allowing for the display of an application through a virtual operating field located on a display. For example, rendered surface 353 may include the layout of elements to be displayed, values to be displayed, labels to be displayed, fields to be displayed, colors, shapes, etc. In other embodiments, rendered surface 353 may include only information to be included within an image displayed to a user. For example, rendered surface 353 may include values, labels, and/or fields, but the layout (e.g., position of information, color, size, etc.) may be determined by other modules (e.g., layout manager 357, window manager 355, etc.).

In some embodiments, application modules 351 are located on different domains. For example, an application module 351 may be located on infotainment domain 410 with another application module located on cloud domain 414. Application modules 351 on different domains may pass information and/or instructions to modules on other domains using shared memory 424. A rendered surface 353 may be passed from an application module 351 to native HMI domain 412 as a frame buffer. Application modules 351 on different domains may also receive information and/or instructions through shared memory 424. For example, a user input may be passed from native HMI domain 412 as event output to shared memory 424, and an application module 351 on a different domain may receive the user input as an event input from shared memory 424.

Window manager 355 manages the display of information on one or more displays 347. In some embodiments, windows manager 355 takes input from other modules. For example, window manager 355 may use input from layout manager 357 and application module 351 (e.g., rendered surface 353) to compose an image for display on display 347. Window manager 355 may route display information to the appropriate display 347. Input from layout manger 357 may include information from system configuration module 341, application database module 343, user input instructions to change a display layout from user input manager 359, a layout of application displays on a single display 347 according to a layout heuristic or rule for managing virtual operating fields associated with a display 347, etc. Similarly, window manager 355 may handle inputs and route them to other modules (e.g., output instructions). For example, window manager 355 may receive a user input and redirect it to the appropriate client or application module 351. In some embodiments, windows manager 355 can compose different client or application surfaces (e.g., display images) based on X,Y, or Z order. Windows manager 355 may be controlled by a user through user inputs. Windows manager 355 may communicate to clients or applications over a shell (e.g., Wayland shell). For example, window manager 355 may be a X-Server window manager, Windows window manager, Wayland window manager, Wayland server, etc.).

Layout manager 357 generates the layout of applications to be displayed on one or more displays 347. Layout manager 357 may acquire system configuration information for use in generating a layout of application data. For example, layout manager 357 may acquire system configuration information such as the number of displays 347 including the resolution and location of the displays 347, the number of window managers in the system, screen layout scheme of the monitors (bining), vehicle states, etc. In some embodiments, system configuration information may be retrieved by layout manager 357 from system configuration module 341.

Layout manager 357 may also acquire application information for use in generating a layout of application data. For example, layout manager 357 may acquire application information such as which applications are allowed to be displayed on which displays 347 (e.g., HUD, CID, ICD, etc.), the display resolutions supported by each application, application status (e.g., which applications are running or active), track system and/or non-system applications (e.g., task bar, configuration menu, engineering screen etc.), etc.

In some embodiments, layout manager 357 may acquire application information from application database module 343. In further embodiments, layout manager 357 may acquire application information from application module 351. Layout manager 357 may also receive user input information. For example, an instruction and/or information resulting from a user input may be sent to layout manager 357 from user input manager 359. For example, a user input may result in an instruction to move an application from one display 347 to another display 347, resize an application image, display additional application items, exit an application, etc. Layout manager 357 may execute an instruction and/or process information to generate a new display layout based wholly or in part on the user input.

Layout manager 357 may use the above information or other information to determine the layout for application data (e.g., rendered surface 353) to be displayed on one or more displays. Many layouts are possible. Layout manager 357 may use a variety of techniques to generate a layout as described herein. These techniques may include, for example, size optimization, prioritization of applications, response to user input, rules, heuristics, layout databases, etc.

Layout manager 357 may output information to other modules. In some embodiments, layout manager 357 sends an instruction and/or data to application module 351 to render application information and/or items in a certain configuration (e.g., a certain size, for a certain display 347, for a certain display location (e.g., virtual operating field), etc. For example, layout manager 357 may instruct application module 351 to generate a rendered surface 353 based on information and/or instructions acquired by layout manager 357.

In some embodiments, rendered surface 353 or other application data may be sent back to layout manager 357 which may then forward it on to widow manager 355. For example, information such as the orientation of applications and/or virtual operating fields, size of applications and/or virtual operating fields, which display 347 on which to display applications and/or virtual operating fields, etc. may be passed to window manager 355 by layout manager 357. In other embodiments, rendered surface 353 or other application data generated by application module 351 in response to instructions from layout manager 357 may be transmitted to window manager 355 directly. In further embodiments, layout manager 357 may communicate information to user input manager 359. For example, layout manager 357 may provide interlock information to user input manager 359 to prevent certain user inputs.

Multi-core processing environment 400 may receive user input 361. User input 361 may be in response to user inputs such as touchscreen input (e.g., presses, swipes, gestures, etc.), hard key input (e.g., pressing buttons, turning knobs, activating switches, etc.), voice commands, etc. In some embodiments, user input 361 may be input signals or instructions. For example, input hardware and/or intermediate control hardware and/or software may process a user input and send information to multicore processing environment 400. In other embodiments, multi-core processing environment 400 receives user input 361 from vehicle interface system 301. In further embodiments, multi-core processing environment 400 receives direct user inputs (e.g., changes in voltage, measured capacitance, measured resistance, etc.). Multi-core processing environment 400 may process or otherwise handle direct user inputs. For example, user input manager 359 and/or additional module may process direct user input.

User input manager 359 receives user input 361. User input manager 359 may process user inputs 361. For example, user input manager 359 may receive a user input 361 and generate an instruction based on the user input 361. For example, user input manager 359 may process a user input 361 consisting of a change in capacitance on a CID display and generate an input instruction corresponding to a left to right swipe on the CID display. User input manager may also determine information corresponding to a user input 361. For example, user input manager 359 may determine which application module 351 corresponds to the user input 361. User input manager 359 may make this determination based on the user input 361 and application layout information received from layout manager 357, window information from window manager 355, and/or application information received from application module 351.

User input manager 359 may output information and/or instructions corresponding to a user input 361. Information and/or instructions may be output to layout manager 357. For example, an instruction to move an application from one display 347 to another display 347 may be sent to layout manager 357 which instructs application modules 351 to produce an updated rendered surface 353 for the corresponding display 347. In other embodiments, information and/or instructions may be output to window manager 355. For example, information and/or instruction may be output to window manager 355 which may then forward the information and/or instruction to one or more application modules 351. In further embodiments, user input manager 359 outputs information and/or instructions directly to application modules 351.

In some embodiments, system configuration module 341, application database module 343, layout manager 357, window manager 355, and our user input manager 359 may be located on native HMI domain 412. The functions described above may be carried out using shared memory 424 to communicate with modules located on different domains. For example, a user input may be received by user input manager 359 located on native HMI domain 412. The input may be passed to an application located on another domain (e.g., infotainment domain 410) through shared memory 424 as an event. Application module 351 which receives the input may generate a new rendered surface 353. The rendered surface 353 may be passed to layout manager 237 and/or window manager 355 located on native HMI domain 412 as a frame buffer client using shared memory 424. Layout manager 357 and/or window manager 355 may then display the information using display 347. The above is exemplary only. Multiple configurations of modules and domains are possible using shared memory 424 to pass instructions and/or information between domains.

Rendered surfaces 353 and/or application information may be displayed on one or more displays 347. Displays 347 may be ICDs, CIDs, HUDs, rear seat displays, etc. In some embodiments, displays 347 may include integrated input devices. For example a CID display 347 may be a capacitive touchscreen. One or more displays 347 may form a display system (e.g., extended desktop). The displays 347 of a display system may be coordinated by one or modules of multi-core processing environment 400. For example, layout manager 357 and/or window manager 355 may determine which applications are displayed on which display 347 of the display system. Similarly, one or more module may coordinate interaction between multiple displays 347. For example, multi-core processing environment 400 may coordinate moving an application from one display 347 to another display 347.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. Likewise, software implementations could be accomplished with standard programming techniques with rule based logic and other logic to accomplish the various connection steps, processing steps, comparison steps and decision steps.

## Claims

1. A computer system for integration with a vehicle user interface, the computer system comprising:
a processing system comprising a multi-core processor, wherein the processing system is configured to provide virtualization for a first guest operating system in a first core or cores of the multi-core processor and to provide virtualization for a second guest operating system in a second and different core or cores of the multi-core processor;
a hypervisor (402) executed by the processing system, the hypervisor (402) configured to perform an initial configuration and allocation of the memory for the virtualization;
wherein the first guest operating system and the second guest operating system access the memory based on the initial configuration and allocation without referencing the hypervisor (402) such that the first guest operating system is configured for high reliability operation and the virtualization prevents operations of the second guest operating system from disrupting the high reliability operation of the first guest operating system,
the computer system further comprising a plurality of processing domains on which applications are run;
wherein one of the plurality of processing domains is a processing domain which controls a hardware networking adapter;
wherein applications running on the remaining processing domains access the hardware networking adapter using virtual networking adapters exposed to their operating system's user spaces; and
wherein the virtual networking adapters use domain-to-domain interrupt distribution and reading and writing of a shared memory space to effect communication between processing domains,
wherein the hypervisor (402) is configured to associate the first guest operating system with at least a first core of the multi-core microprocessor and the second guest operating system with at least a second core of the multi-core processor, wherein the first guest operating system is configured for a high reliability application and the second guest operating system is configured for a lower reliability application, wherein the high reliability application comprises outputting safety critical vehicle information to a display system (426); and
wherein the lower reliability application comprises outputting non-safety critical vehicle information to the same display system (426).

2. The computer system of Claim 1, wherein the multi-core processor is configured to:
provide a first full virtualization environment using the first core or cores; and
provide a second full virtualization environment on the second core or cores such that no modifications to the second guest operating system are necessary.

3. The computer system of Claim 1, wherein the hypervisor (402) allocates each guest operating system's domain its own core, its own memory region, and its own devices.

4. The computer system of Claim 1, wherein the hypervisor (402) is not used for distributing interrupts from one guest operating guest operating system to another guest operating system.

5. The computer system of Claim 1, wherein interrupts are provided from one guest operating system to another guest operating system via a virtual generic interrupt controller.

6. The computer system of Claim 1, further comprising virtual devices established for communication between the guest operating systems operating in different cores, each virtual device comprising a device tree identifying the device's interrupts and doorbell interrupts that specify what interrupts the device should use for communication to other cores.

7. The computer system of Claim 1, further comprising a two stage memory management unit (404) that maps intermediate addresses used by guest operating systems to memory locations or memory mapped devices.

8. The computer system of Claim 1, further comprising a plurality of processing domains on which applications are run;
wherein one of the plurality of processing domains is a processing domain which conducts a combination of graphics from disparate processing domains;
wherein applications running on the remaining processing domains fill a frame buffer and provide frame buffer information to a virtual device running on the domain which conducts the combination.

9. The computer system of Claim 8, wherein the graphics combination occurs without transferring metadata describing the graphics to the processing domain which conducts the combination of graphics;
wherein metadata is not transmitted to the first guest operating system configured for high reliability by any other processing domain.

10. A vehicle interface system (301) comprising the computer system of Claim 1;
wherein the vehicle interface system (301) includes one or more electronic displays;
wherein the processing system is communicably coupled to the one or more electronic displays and configured to run one or more applications that generate display data presented via the one or more electronic displays;
wherein the processing system uses hardware virtualization to generate a plurality of discrete domains, each of the domains comprising a discrete set of physical hardware such that operations performed by the multi-core processing environment in different domains cannot interfere with each other.

11. The vehicle interface system (301) of Claim 10, further comprising one or more peripheral devices providing at least one of a user interface for the vehicle interface system and a data communications interface for the vehicle interface system;
wherein each of the domains comprises a discrete subset of the peripheral devices.

## Patentansprüche

1. Computersystem zur Integration mit einer Fahrzeugbenutzerschnittstelle, wobei das Computersystem Folgendes umfasst:
ein Verarbeitungssystem, das einen Mehrkernprozessor umfasst, wobei das Verarbeitungssystem dazu konfiguriert ist, eine Virtualisierung für ein erstes Guest-Betriebssystem in einem ersten Kern oder Kernen des Mehrkernprozessors bereitzustellen und eine Virtualisierung für ein zweites Guest-Betriebssystem in einem zweiten und unterschiedlichen Kern oder Kernen des Mehrkernprozessors bereitzustellen;
ein Hypervisor (402), das durch das Verarbeitungssystem ausgeführt wird, wobei das Hypervisor (402) dazu konfiguriert ist, eine anfängliche Konfiguration und Zuweisung des Speichers für die Virtualisierung durchzuführen;
wobei das erste Guest-Betriebssystem und das zweite Guest-Betriebssystem auf Grundlage der anfänglichen Konfiguration und Zuweisung auf den Speicher zugreifen, ohne das Hypervisor (402) zu referenzieren, sodass das erste Guest-Betriebssystem für einen Betrieb mit hoher Zuverlässigkeit konfiguriert ist und die Virtualisierung verhindert, dass Operationen des zweiten Guest-Betriebssystems den Betrieb mit hoher Zuverlässigkeit des ersten Guest-Betriebssystems stören, wobei das Computersystem ferner eine Vielzahl von Verarbeitungsdomänen umfasst, auf denen die Anwendungen ausgeführt werden;
wobei eine der Vielzahl von Verarbeitungsdomänen eine Verarbeitungsdomäne ist, die einen Hardware-Netzwerkadapter steuert;
wobei Anwendungen, die auf den verbleibenden Verarbeitungsdomänen ausgeführt werden, unter Verwendung von virtuellen Netzwerkadaptern, die den Benutzerräumen ihres Betriebssystems ausgesetzt sind, Zugang zu dem Hardware-Netzwerkadapter aufweisen; und
wobei die virtuellen Netzwerkadapter Domäne-zu-Domäne-Interrupt-Verteilung und Lesen und Schreiben eines gemeinsamen Speicherraums verwenden, um eine Kommunikation zwischen Verarbeitungsdomänen zu bewirken,
wobei das Hypervisor (402) dazu konfiguriert ist, das erste Guest-Betriebssystem mindestens einem ersten Kern des Mehrkernprozessors zuzuordnen und das zweite Guest-Betriebssystem mindestens einem zweiten Kern des Mehrkernprozessors zuzuordnen,
wobei das erste Guest-Betriebssystem für eine Anwendung mit hoher Zuverlässigkeit konfiguriert ist und das zweite Guest-Betriebssystem für eine Anwendung mit einer niedrigeren Zuverlässigkeit konfiguriert ist,
wobei die Anwendung mit hoher Zuverlässigkeit Ausgeben sicherheitskritischer Fahrzeuginformationen an ein Anzeigesystem (426) umfasst; und
wobei die Anwendung mit niedrigerer Zuverlässigkeit Ausgeben von nicht kritischen Fahrzeuginformationen an dasselbe Anzeigesystem (426) umfasst.

2. Computersystem nach Anspruch 1, wobei der Multikernprozessor zu Folgendem konfiguriert ist:
Bereitstellen einer ersten vollständigen Virtualisierungsumgebung unter Verwendung des/der ersten Kerns oder Kerne; und
Bereitstellen einer zweiten vollständigen Virtualisierungsumgebung an dem/den zweiten Kern oder Kernen, sodass keine Modifikationen des zweiten Guest-Betriebssystems nötig sind.

3. Computersystem nach Anspruch 1, wobei das Hypervisor (402) der Domäne von jedem Guest-Betriebssystem ihren eigenen Kern, ihren eigenen Speicherbereich und ihre eigenen Vorrichtungen zuweist.

4. Computersystem nach Anspruch 1, wobei das Hypervisor (402) nicht zum Verteilen von Interrupts von einem Guest-Betriebssystem zu einem anderen Guest-Betriebssystem verwendet wird.

5. Computersystem nach Anspruch 1, wobei Interrupts von einem Guest-Betriebssystem zu einem anderen Guest-Betriebssystem über einen virtuellen generischen Interrupt-Controller bereitgestellt sind.

6. Computersystem nach Anspruch 1, das ferner virtuelle Vorrichtungen umfasst, die zur Kommunikation zwischen den Guest-Betriebssystemen aufgebaut ist, die in unterschiedlichen Kernen betrieben werden, wobei jede virtuelle Vorrichtung ein Vorrichtungsverzeichnis umfasst, das die Interrupts und Doorbell-Interrupts der Vorrichtung identifiziert, die festlegen, welche Interrupts die Vorrichtung zur Kommunikation mit anderen Kernen verwenden sollte.

7. Computersystem nach Anspruch 1, das ferner eine Zweistufen-Speichermanagementeinheit (404) umfasst, die Zwischenadressen, die durch Guest-Betriebssysteme verwendet werden, Speicherorten oder im Speicher zugewiesenen Vorrichtungen zuweist.

8. Computersystem nach Anspruch 1, das ferner eine Vielzahl von Verarbeitungsdomänen aufweist, auf denen Anwendungen ausgeführt werden;
wobei eine der Vielzahl von Verarbeitungsdomänen eine Verarbeitungsdomäne ist, die eine Kombination aus Grafik aus unterschiedlichen Verarbeitungsdomänen vornimmt;
wobei Anwendungen, die auf den verbleibenden Verarbeitungsdomänen ausgeführt werden, einen Frame-Puffer füllen und einer virtuellen Vorrichtung, die auf der Domäne ausgeführt wird, welche die Kombination leitet, Frame-Pufferinformationen bereitstellen.

9. Computersystem nach Anspruch 8, wobei die Grafikkombination ohne Übertragen von Metadaten, die die Grafik beschreiben, an die Verarbeitungsdomäne erfolgt, welche die Kombination von Grafiken vornimmt;
wobei die Metadaten nicht an das erste Guest-Betriebssystem übertragen werden, das durch eine beliebige andere Verarbeitungsdomäne für hohe Zuverlässigkeit konfiguriert wurde.

10. Fahrzeugschnittstellensystem (301), das das Computersystem nach Anspruch 1 umfasst:
wobei das Fahrzeugschnittstellensystem (301) eine oder mehrere elektronische Anzeigen beinhaltet;
wobei das Verarbeitungssystem kommunikativ an die eine oder die mehreren elektronischen Anzeigen gekoppelt ist und dazu konfiguriert ist, eine oder mehrere Anwendungen auszuführen, die Anzeigedaten erzeugen, welche über die eine oder die mehreren elektronischen Anzeigen dargestellt sind;
wobei das Verarbeitungssystem Hardware-Virtualisierung verwendet, um eine Vielzahl von einzelnen Domänen zu erzeugen, wobei jede Domäne einen einzelnen Satz von physischer Hardware umfasst, sodass die Operationen, die durch die Mehrkernverarbeitungsumgebung in unterschiedlichen Domänen durchgeführt werden, einander nicht stören können.

11. Fahrzeugschnittstellensystem (301) nach Anspruch 10, das ferner eine oder mehrere Peripherievorrichtungen umfasst, die mindestens eines von einer Benutzerschnittstelle für das Fahrzeugschnittstellensystem und einer Datenkommunikationsschnittstelle für das Fahrzeugschnittstellensystem bereitstellen;
wobei jede der Domänen einen einzelnen Untersatz der Peripherievorrichtungen umfasst.

## Revendications

1. Système informatique destiné à être intégré à une interface utilisateur d'un véhicule, le système informatique comprenant:
un système de traitement comprenant un processeur multicoeur, dans lequel le système de traitement est configuré pour fournir une virtualisation à un premier système d'exploitation invité dans un premier coeur ou des coeurs du processeur multicoeur et pour fournir une virtualisation à un second système d'exploitation invité dans un second coeur différent ou des coeurs du processeur multicoeur;
un hyperviseur (402) exécuté par le système de traitement, l'hyperviseur (402) étant configuré pour effectuer une configuration initiale et une allocation de la mémoire pour la virtualisation;
dans lequel le premier système d'exploitation invité et le second système d'exploitation invité accèdent à la mémoire sur la base de la configuration initiale et de l'allocation sans consulter l'hyperviseur (402), de sorte que le premier système d'exploitation invité est configuré pour un fonctionnement à haute fiabilité et la virtualisation empêche que les opérations du second système d'exploitation invité perturbent le fonctionnement à haute fiabilité du premier système d'exploitation invité, le système informatique comprenant en outre une pluralité de domaines de traitement sur lesquels des applications sont exécutées;
dans lequel l'un de la pluralité de domaines de traitement est un domaine de traitement qui commande un adaptateur de réseau matériel;
dans lequel les applications exécutées sur les domaines de traitement restants accèdent à l'adaptateur de réseau matériel en utilisant des adaptateurs de réseau virtuels exposés aux espaces utilisateur de leur système d'exploitation; et
dans lequel les adaptateurs de réseau virtuels utilisent une distribution d'interruption de domaine à domaine, ainsi que la lecture et l'écriture d'un espace mémoire partagé pour établir une communication entre les domaines de traitement,
dans lequel l'hyperviseur (402) est configuré pour associer le premier système d'exploitation invité à au moins un premier coeur du microprocesseur multicoeur et le second système d'exploitation invité à au moins un second coeur du processeur multicoeur,
dans lequel le premier système d'exploitation invité est configuré pour une à haute fiabilité et le second système d'exploitation invité est configuré pour une application à fiabilité inférieure,
dans lequel l'application à haute fiabilité comprend l'envoi d'informations de véhicule essentielles à la sécurité vers un système d'affichage (426); et
dans lequel l'application à fiabilité inférieure comprend l'envoi d'informations de véhicule non essentielles à la sécurité vers le même système d'affichage (426).

2. Système informatique selon la revendication 1, dans lequel le processeur multicoeur est configuré pour:
fournir un premier environnement de virtualisation complet utilisant le premier coeur ou les coeurs; et
fournir un second environnement de virtualisation complet sur le second coeur ou les coeurs de sorte qu'aucune modification du second système d'exploitation invité n'est nécessaire.

3. Système informatique selon la revendication 1, dans lequel l'hyperviseur (402) alloue son propre coeur, sa propre région de mémoire et ses propres dispositifs au domaine de chaque système d'exploitation invité.

4. Système informatique selon la revendication 1, dans lequel l'hyperviseur (402) n'est pas utilisé pour la distribution d'interruptions d'un système d'exploitation invité à un autre système d'exploitation invité.

5. Système informatique selon la revendication 1, dans lequel des interruptions sont fournies d'un système d'exploitation invité à un autre système d'exploitation invité via un dispositif de commande d'interruption générique virtuel.

6. Système informatique selon la revendication 1, comprenant en outre des dispositifs virtuels établis pour la communication entre les systèmes d'exploitation invités fonctionnant dans des coeurs différents, chaque dispositif virtuel comprenant une arborescence de dispositifs identifiant les interruptions du dispositif et des interruptions de sonnerie qui spécifient les interruptions que le dispositif doit utiliser pour communiquer avec d'autres coeurs.

7. Système informatique selon la revendication 1, comprenant en outre une de gestion de mémoire à deux étages (404) qui mappe les adresses intermédiaires utilisées par les systèmes d'exploitation invités vers des emplacements de mémoire ou des dispositifs mappés en mémoire.

8. Système informatique selon la revendication 1, comprenant en outre une pluralité de domaines de traitement sur lesquels des applications sont exécutées; dans lequel l'un de la pluralité de domaines de traitement est un domaine de traitement qui effectue une combinaison de graphiques provenant de domaines de traitement variés;
dans lequel les applications s'exécutant sur les domaines de traitement restants remplissent une mémoire tampon de trame et fournissent des informations de mémoire tampon de trame à un dispositif virtuel s'exécutant sur le domaine qui effectue la combinaison.

9. Système informatique selon la revendication 8, dans lequel la combinaison de graphiques se produit sans transférer de métadonnées décrivant les graphiques au domaine de traitement qui effectue la combinaison de graphiques;
dans lequel les métadonnées ne sont pas transmises au premier système d'exploitation invité configuré pour une haute fiabilité par tout autre domaine de traitement.

10. Système d'interface de véhicule (301) comprenant le système informatique selon la revendication 1;
dans lequel le système d'interface de véhicule (301) comporte un ou plusieurs affichages électroniques;
dans lequel le système de traitement est couplé en communication aux un ou plusieurs affichages électroniques et est configuré pour exécuter une ou plusieurs applications qui génèrent des données d'affichage présentées par l'intermédiaire des un ou plusieurs affichages électroniques;
dans lequel le système de traitement utilise la virtualisation matérielle pour générer une pluralité de domaines discrets, chacun des domaines comprenant un ensemble discret de matériel physique de sorte que les opérations effectuées par l'environnement de traitement multicoeur dans des domaines différents ne peuvent pas interférer les unes avec les autres.

11. Système d'interface de véhicule (301) selon la revendication 10, comprenant en outre un ou plusieurs dispositifs périphériques fournissant au moins l'une d'une interface utilisateur pour le système d'interface de véhicule et d'une interface de communication de données pour le système d'interface de véhicule;
dans lequel chacun des domaines comprend un sous-ensemble discret des dispositifs périphériques.
